# EUROPEAN PATENT SPECIFICATION

(11) **EP 0 492 708 B1**
(45) Date of publication and mention of the grant of the patent: **08.05.1996**
(21) Application number: 91203302.4
(22) Date of filing: 14.12.1991
(51) Int. Cl.: C08J 5/10, C08L 21/00, C08K 5/37

(54) **Article comprising at least one metal wire buried in a vulcanized elastomeric material**
Artikel, welche wenigstens ein Metalldrahtkabel enthalten zur Verstärkung von vulkanisierten Elastomeren
Article comprenant au moins un fil métallique inclus dans une matière élastomérique vulcanisée

(30) Priority: 27.12.1990 IT 2254790
(43) Date of publication of application: 01.07.1992
(73) Proprietor: PIRELLI COORDINAMENTO PNEUMATICI S.p.A., I-20126 Milano (IT)
(72) Inventor: Garro, Luciano, I-20052 Monza (Milano) (IT); Falzolgher, Enzo, I-20144 Milano (IT)
(74) Representative: Marchi, Massimo

(56) References cited:
- US-A- 4 258 770
- US-A- 4 851 469
- PATENT ABSTRACTS OF JAPAN, vol. 6, no. 149 (C-118)[1027], 10th August 1982; & JP-A-57 070 138
- JAPANESE PATENTS GAZETTE, section Ch, week 8741, 25th November 1987, class A12E19, page 5, abstract no. 87-288537/41, Derwent Publications Ltd, London, GB; & JP-A-62 201 949
- PATENT ABSTRACTS OF JAPAN, vol. 12, no. 56 (C-477)[2903], 19th February 1988; & JP-A-62 201 949
- KAUTSCHUK UND GUMMI-KUNSTSTOFFE, vol. 37, no. 6, June 1984, pages 493-496, Heilderberg, DE; J.R. DAVIES: "Verbesserte Adhäsion von Kautschuk an verzinktem Stahlcord für Förderbänder"

## Description

The present invention relates to an article comprising at least one metal wire buried in a vulcanized elastomeric material. More in particular, the present invention relates to the elastomer/metal connection in an article comprising at least one metal wire buried in a vulcanized elastomeric matrix.

It is known that structures of this type are very frequent in articles such as tires, conveyor belts, transmission belts, flexible hose and such like.

In said articles, the metal wires, possibly in the form of cords, must, at one and the same time, have adequate mechanical features, good resistance to corrosion and a good adhesion to the elastomeric material.

Steel, the elective material as regards mechanical features, has the disadvantage of adhering in an insufficient manner to the vulcanized elastomeric material. In order to obtain high level of adhesion to the vulcanized elastomeric material it is thus necessary to coat the steel with suitable materials.

For instance, it is known that it is possible to obtain good adhesion with steel wires coated with a layer of brass constituted by some 70% of copper and 30% of zinc. In this case the connection is promoted, thanks to the formation of a thin layer of copper sulphide, by the sulphur itself or by its known derivatives present, as vulcanizing agents, in the mixture.

US-A-4 258 770 confirms that brass is always sharply superior to zinc in forming linkages with vulcanized rubber.

JP-A-57 70-138 describes a rubber composition comprising a cobalt salt of an organic acid and trimercaptotriazine for use with brass-plated reinforcements.

The connection between brassed steel and elastomer decays due to the presence of humidity and oxygen. The connection's decay can be contrasted in part by adding some cobalt in the form of a salt. In this case it is believed that the role of the cobalt is to determine a fall in the electrical conductivity of the layer of copper sulphide; this corresponds to a slower speed of diffusion of the Zn⁺⁺ ions and, as a consequence, a reduced growth of the interface layer of ZnO/Zn(OH)₂ responsible for the destruction of the CuₓS film and thus of the connection.

While the condition of ensuring a connection that is good and stable in time is, on the whole, satisfied, brassed steel is but scantily resistant to corrosion.

In the articles of vulcanized elastomeric material reinforced with brassed steel wires, possibly in the form of cords, such as, say, tires, corrosion is induced both by the humidity which permeates the elastomer and by the water which manages to come into contact with the brassed steel reinforcing structure through holes or tears of the elastomer.

In the case of articles comprising metal wires buried in a vulcanized elastomeric matrix the need is therefore still very much felt of satisfying two distinct requirements: to ensure a good wire/vulcanized elastomeric matrix connection and a good resistance of the wire to corrosion.

An apparently simple solution would be that of coating the steel wires with a metal, such as, say, zinc, capable of preserving them from corrosion.

On the other hand, experiments carried out by the Applicant with mixtures which provide a good connection in the case of brassed steel cords have given altogether unsatisfactory results on galvanized steel cords.

The Applicant has therefore carried out other experiments raising the concentrations of the components capable of promoting a good connection of the elastomer with the brassed cords. More in particular the following have been used:
- a high concentration of cobalt (some 0.5-1%, as metallic Cobalt, by weight with respect to the weight of elastomer in the mixture
- high concentrations of resins that form in the mixture during vulcanization by resorcinol reaction in the presence of donors of methylene groups (resorcinol concentration in the mixture before vulcanization = some 4-10% by weight with respect to the weight of elastomer in the mixture); and/or
- a high concentration of sulphur (at least some 6% with respect to the weight of elastomer in the mixture);

In all cases articles have been obtained whose features are on the whole inferior to those of the brassed cord/conventional mixture articles.

In fact, the mixtures with high cobalt concentrations provide connections with limited resistance to overvulcanization and to aging at high temperatures; those with high resin concentrations give environmental problems (generation of fumes) and connections with scant resistance to aging; those with high sulphur concentrations make processing difficult and have limited resistance to aging.

The Applicant has therefore experimented with the behaviour of products known for their capacity of encouraging the connection of the elastomer with metal surfaces such as, say, the marcapto triazines.

But even these substances, on the other hand, have not given satisfactory results on conventional galvanized steel/elastomeric matrices cords for brassed steel cords.

But it has unexpectedly been found that there is a considerable synergy of action between cobalt and trimercapto triazine so much as to promote the maintenance of good connection levels even after aging in the presence of humidity.

The object of the present invention is thus constituted by an article comprising at least one metal wire buried in a vulcanized elastomeric matrix obtained from a mixture comprising at least one vulcanizable elastomer and at least one vulcanization agent constituted by sulphur or by a derivative thereof, characterized in that the metal wire is of galvanized steel and in that the vulcanizable mixture comprises at least 0.2% by weight, with respect to the weight of said elastomer, of trimercapto triazine and from 0.1 to 0.5% by weight, with respect to the weight of said elastomer, of cobalt.

The thickness of the zinc coating layer on the steel wire ranges preferably from 0.15 to 0.35 microns.

Concentrations of trimercaptotriazine ranging from about 0.2 to 3% are generally sufficient to attain the desired result.

Preferably, cobalt is added to the vulcanizable mixture in the form of a salt of the bivalent cobalt. Even more preferably a salt of the bivalent cobalt is used that has a high solubility in the elastomer.

Typical examples of suitable cobalt salts according to the present invention are the boric salt marketed by the Manchem firm with the name of Manobond 680™ and the neodecanoate of the Goldschmidt and Manchem firms.

The preferred concentrations of bivalent metallic cobalt range from about 0.1 to 0.3% by weight, with respect to the weight of said elastomer.

Further objects of the present invention are the tires, the conveyor belts, the transmission belts and the flexible hose which comprise at least one reinforcing structure constituted by an article according to the present invention.

The examples and the tests given below are given purely as a non-limiting illustration.

In the examples and tests, the letters 74175WLL identify the form of a cord commonly used in reinforcing structures of jumbo radial tires.

It is constituted by 7 strands each with 4 wires with a diameter of 0.175 mm round which a wire is wound known as «vergolino» having a diameter of 0.15 mm, a cord of the equal sense type (that is, the direction of winding of the wires in the strand and of the strands in the cord is always the same). Obviously, the cord used in the examples is formed by wires of galvanized steel while those commonly used in tires are of brassed steel.

The other letters used in the examples have the following meanings:
- NR =: natural rubber,
- C.B. =: carbon black,
- HMMM =: hexamethoxymethylmelamine,
- Accelerator =: dicyclohexylbenzothiazolsulphenamide,
- ZF =: trimercapto triazine.

Lastly, the quantities of the components of the vulcanizable mixtures exemplified are expressed in parts by weight.

### EXAMPLES 1 - 7

Samples have been prepared by burying 74175WLL steel cords coated with a zinc layer of 0.24 (Samples 024) and 0.29 (Samples 029) microns in mixtures having the compositions indicated herebelow and vulcanizing said mixtures at 151°C for 40 minutes.

| Ingredients | Mixture | | | | | | |
|---|---|---|---|---|---|---|---|
| | K' | K" | K‴ | A | B | C | D |
| NR | 100 | 100 | 100 | 100 | 100 | 100 | 100 |
| ZnO | 8 | 8 | 8 | 8 | 8 | 8 | 8 |
| CoII | = | 0.24 a) | = | 0.24 a | 0.24 b | 0.20 c | 0.20 d |
| C.B. | 55 | 50 | 55 | 50 | 60 | 50 | 50 |
| SiO₂ | = | = | = | = | 7 | 10 | 10 |
| Resorcinol | 2 | 2 | 2 | 2 | 2 | 3 d | 3 d |
| HMMM | 2.4 | 2.4 | 2.4 | 2.4 | 2.4 | 2.4 | 2.4 |
| Accelerator | 1.2 | 1.2 | 1.2 | 1.0 | 1.2 | 1.1 | 1.2 |
| Sulphur | 4 | 4 | 4 | 6 | 6 | 4 | 3 |
| ZF | = | = | 1 | 1 | 1 | 0.5 | 1.5 |

| | | | | | | | |
|---|---|---|---|---|---|---|---|
| a) = equal to 1.2 g of Manobond^{TM}680C | | | | | | | |
| b) = equal to 1.2 g of Neodecanoate | | | | | | | |
| c) = equal to 1.0 g of Manobond^{TM}680C | | | | | | | |
| d) = pre-condensed Resorcinol (Penacolite^{TM}) | | | | | | | |

### TESTS

### I. Measurement of the Elastomer/Metal connection

The determination has been made with a method which measures the force necessary to withdraw a cord from a cylinder of vulcanized rubber, described in Kautschuk und Gummi Kunstoffe vol. 5 228-232 (1969). The Samples 024 and 029 had been prepared by vulcanizing the mixtures from K' to D as indicated in the previous Examples 1-7.

The withdrawal load has been measured with an electronic dynamometer.

The degree of coating of the cord extracted from the sample, expressed by means of a coating index, assesses the percentage of the surface of the cord which is still well coated with rubber. When the value of the coating index is high, the separation between cord and mixture has taken place due to a defect of cohesion of the mixture and not due to a defect of adhesion of the mixture/metal interface.

CSF indicates the value of the withdrawal load in Newtons; on a sample having a burial length equal to 20 mm; GC, on the other hand, indicates the value of the coating index.

The initial values and those observed after keeping them in a climatic room at 65°C/90% relative humidity for 8 and 16 days are given below:

| SAMPLES 024 | | | | | | | | |
|---|---|---|---|---|---|---|---|---|
| Type of mixture | | | | | | | | |
| | A | | B | | C | | D | |
| | CSF | GC | CSF | GC | CSF | GC | CSF | GC |
| Initial | 1175 | 4 | 1300 | 4 | 1350 | 4 | 1140 | 4 |
| After 8 days | 1130 | 4 | 1050 | 4 | 970 | 2 | 860 | 2 |
| After 16 days | 750 | 4 | 870 | 4 | 560 | 1 | 880 | 2 |

| Type of mixture | | | | | | | | |
|---|---|---|---|---|---|---|---|---|
| | K' | | K" | | K‴ | | | |
| | CSF | GC | CSF | GC | CSF | GC | | |
| Initial | 105 | 1 | 111 | 1 | 1160 | 3 | | |
| After 8 days | - | - | - | - | 90 | 1 | | |
| After 16 days | - | - | - | - | 105 | 1 | | |
| | | | | | | | | |

| SAMPLES 029 | | | | | | | | |
|---|---|---|---|---|---|---|---|---|
| Type of mixture | | | | | | | | |
| | A | | B | | C | | D | |
| | CSF | GC | CSF | GC | CSF | GC | CSF | GC |
| Initial | 1230 | 4 | 1300 | 4 | 1300 | 4 | 1125 | 4 |
| After 8 days | 1100 | 4 | 1070 | 4 | 1020 | 3 | 840 | 2 |
| After 16 days | 865 | 4 | 920 | 4 | 695 | 2 | 720 | 2 |

| Type of mixture | | | | | | | | |
|---|---|---|---|---|---|---|---|---|
| | K' | | K" | | K‴ | | | |
| | CSF | GC | CSF | GC | CSF | GC | | |
| Initial | 100 | 1 | 116 | 1 | 1176 | 3 | | |
| After 8 days | - | - | - | - | 103 | 1 | | |
| After 16 days | - | - | - | - | 123 | 1 | | |
| | | | | | | | | |

### II. Measurement of Resistance to Corrosion

The resistance of the wire to corrosion has been assessed by the measurement of the breaking load (CR) of the wire before and after aging in a climatic room at 65°C/90% relative humidity for 15, 30 and 45 days.

The tests have been conducted on steel wires with a diameter of 0.175 mm coated with various thicknesses of zinc (0.17, 0.24, 0.29 microns) compared with a steel wire of the same diameter, coated with 0.29 microns of brass.

The results obtained are indicated here below:

| CR | Galvanized wire | | | Brassed wire |
|---|---|---|---|---|
| | 0.17 | 0.24 | 0.29 | 0.29 |
| Initial | 100 | 100 | 100 | 100 |
| After 15 days | 95 | 100 | 94 | 64 |
| After 30 days | 90 | 94 | 96 | 61 |
| After 45 days | 95 | 99 | 97 | 60 |

## Claims

1. Article comprising at least one metal wire buried in a vulcanized elastomeric matrix obtained from a mixture comprising at least one vulcanizable elastomer and at least one vulcanization agent constituted by sulphur or by a derivative thereof, characterized in that the metal wire is of galvanized steel and in that the vulcanizable mixture comprises at least 0.2% by weight, with respect to the weight of said elastomer, of trimercapto triazine and 0.1-0.5% by weight, with respect to the weight of said elastomer, of cobalt.

2. Article according to claim 1, characterised in that the thickness of the zinc coating layer on the steel wire ranges from 0.15 to 0.35 microns.

3. Article according to claim 1 or 2, characterised in that the concentrations of trimercaptotriazine range from about 0.2 to 3% by weight, with respect to the weight of said elastomer.

4. Article according to any claim from 1 to 3, characterised in that use is made of a cobalt salt soluble in the elastomer.

5. Article according to claim 4, characterised in that use is made of a salt of bivalent cobalt.

6. Article according to claims 4 and 5, characterised in that the cobalt salts are Manobond^{TM}680C and neodecanoate.

7. Article according to one of the claims 5 or 6, characterised in that the concentrations of bivalent metallic cobalt range from 0.1 to 0.3 by weight, with respect to the weight of said elastomer.

8. Tire comprising at least one reinforcing structure formed by an article according to any of the preceding claims from 1 to 7.

9. Conveyor belt comprising at least one reinforcing structure formed by an article according to any of the preceding claims from 1 to 7.

10. Transmission belt comprising at least one reinforcing structure formed by an article according to any of the preceding claims from 1 to 7.

11. Flexible hose comprising at least one reinforcing structure formed by an article according to any of the preceding claims from 1 to 7.

## Patentansprüche

1. Erzeugnis, das wenigstens einen Metalldraht umfaßt, der in einer vulkanisierten elastomeren Matrix eingebettet ist, erhalten aus einem Gemisch, das wenigstens ein vulkanisierbares Elastomer und wenigstens ein Vulkanisationsmittel, bestehend aus Schwefel oder einem Derivat davon, umfaßt, dadurch **gekennzeichnet,** daß der Metalldraht aus verzinktem Stahl besteht und das vulkanisierbare Gemisch wenigstens 0,2 Gew.-%, bezogen auf das Gewicht des Elastomers, an Trimercaptotriazin und 0,1 bis 0,5 Gew.-%, bezogen auf das Gewicht des Elastomers, an Cobalt umfaßt.

2. Erzeugnis nach Anspruch 1, dadurch **gekennzeichnet,** daß die Dicke der Zinkbeschichtung auf dem Stahldraht 0,15 bis 0,35 um beträgt.

3. Erzeugnis nach Anspruch 1 oder 2, dadurch **gekennzeichnet,** daß die Trimercaptotriazinkonzentrationen ca. 0,2 bis 3 Gew.-%, bezogen auf das Gewicht des Elastomers, betragen.

4. Erzeugnis nach einem der Ansprüche 1 bis 3, dadurch **gekennzeichnet,** daß ein im Elastomer lösliches Cobaltsalz verwendet wird.

5. Erzeugnis nach Anspruch 4, dadurch **gekennzeichnet,** daß ein Salz des zweiwertigen Cobalts verwendet wird.

6. Erzeugnis nach Anspruch 4 und 5, dadurch **gekennzeichnet,** daß die Cobaltsalze Manobond^{TM} 680C und Neodecanoat sind.

7. Erzeugnis nach einem der Ansprüche 5 oder 6, dadurch **gekennzeichnet,** daß die Konzentrationen des zweiwertigen metallischen Cobalts 0,1 bis 0,3 Gew.-%, bezogen auf das Gewicht der Elastomers, betragen.

8. Reifen mit wenigstens einer Verstärkungsstruktur, gebildet durch ein Erzeugnis nach einem der Ansprüche 1 bis 7.

9. Förderband mit wenigstens einer Verstärkungsstruktur, gebildet durch ein Erzeugnis nach einem der Ansprüche 1 bis 7.

10. Transmissionsriemen mit wenigstens einer Verstärkungsstruktur, gebildet durch ein Erzeugnis nach einem der Ansprüche 1 bis 7.

11. Schlauch mit wenigstens einer Verstärkungsstruktur, gebildet durch ein Erzeugnis nach einem der Ansprüche 1 bis 7.

## Revendications

1. Objet comprenant au moins un fil métallique noyé dans une matrice élastomère vulcanisée obtenue à partir d'un mélange contenant au moins un élastomère vulcanisable et au moins un agent de vulcanisation constitué de soufre ou d'un dérivé de celui-ci, caractérisé en ce que le fil métallique est de l'acier galvanisé et en ce que le mélange vulcanisable comprend au moins 0,2% en poids, par rapport au poids dudit élastomère, de trimercaptotriazine et de 0,1 à 0,5 % en poids de cobalt, par rapport au poids dudit élastomère.

2. Objet selon la revendication 1, caractérisé en ce que l'épaisseur de la couche de revêtement de zinc se trouvant sur le fil d'acier vaut de 0,15 à 0,35 microns.

3. Objet selon la revendication 1 ou 2, caractérisé en ce que la concentration de trimercaptotriazine est comprise entre 0,2 et 3% en poids, par rapport au poids dudit élastomère.

4. Objet selon l'une quelconque des revendications 1 à 3, caractérisé en ce qu'on utilise un sel de cobalt soluble dans l'élastomère.

5. Objet selon la revendication 4, caractérisé en ce qu'on utilise un sel de cobalt bivalent.

6. Objet selon les revendications 4 et 5, caractérisé en ce que les sels de cobalt sont du Manobond^{TM} 680 C et du néodécanoate.

7. Objet selon l'une quelconque des revendications 5 ou 6, caractérisé en ce que la concentration d'ions cobalt est comprise entre 0,1 et 0,3 % en poids, par rapport au poids dudit élastomère.

8. Pneumatique comprenant au moins une structure de renfort formée par un objet conforme à l'une quelconque des revendications précédentes 1 à 7.

9. Courroie de convoyeur comprenant au moins une structure de renfort formée par un objet conforme à l'une quelconque des revendications précédentes 1 à 7.

10. Courroie de transmission comprenant au moins une structure de renfort formée par un objet conforme à l'une quelconque des revendications précédentes 1 à 7.

11. Tuyau souple comprenant au moins une structure de renfort formée par un objet conforme à l'une quelconque des revendications précédentes 1 à 7.
